# EUROPEAN PATENT APPLICATION

(11) **EP 2 564 688 A1**
(43) Date of publication of application: **06.03.2013**
(21) Application number: 11179419.4
(22) Date of filing: 30.08.2011
(51) Int. Cl.: A01G 9/02

(54) **Vegetated panel and associated vegetated wall**

(71) Applicant: Saint-Gogain Cultilene BV, 5048 CA Tilburg (NL)
(72) Inventor: Lautenbach, Klaas Jan, 5048 CA Tilburg (NL)
(74) Representative: Croonenbroek, Thomas Jakob

(57) **Abstract**

The invention relates to a vegetated panel for receiving plants, comprising at least two growth media (9) for plants and comprising a frame (17) maintaining said growth media (9), characterized in that
- said frame (17) is provided with first hanging means (25) able to cooperate with complementary support axis (31) of second hanging means, in order to fix said vegetated panel to a host wall (5) to be equipped with said vegetated panel

The invention also relates to a vegetated wall comprising at least one vegetated panel (1) and a hanging system (7) of said at least one vegetated panel (1) for fixing said at least one vegetated panel (1) on a host wall (5).

## Description

The invention relates to a vegetated panel comprising at least two growth media for holding plants.

This invention is in particular applicable to placing plants on vertical walls. It may be internal walls or external walls. The invention also relates to a vegetated wall comprising such vegetated panels.

The vegetated panels comprise growth media for cultivation of plants.

The plants are introduced into growth media that may be themselves contained in frame, and are cultivated up to an adequate development stage in order to cover totally or partially said frame or developed plants are directly introduced into growth media.

A vegetated wall generally comprises many vegetated panels.

A problem is to fix the panels on the wall.

Indeed, one panel may have a weight of up to 50kg and comprises also at an upper end irrigation means that impose a complex fixing of the panels.

An object of the present invention is to provide an improved vegetated panel which can be securely fixed to a host wall while ensuring a good irrigation of the whole vegetated panels.

To this end, one subject of the invention is a vegetated panel for receiving plants, comprising at least two growth media for plants and comprising a frame maintaining said growth media, characterized in that said frame is provided with first fixing or hanging means able to cooperate with complementary support axis of second hanging means, in order to fix said vegetated panel to a host wall to be equipped with said vegetated panel.

The vegetated panel according to the invention may also comprise one or more of the following characteristics, taken separately or in combination:
- said second hanging means is fixed on host wall to be equipped and comprises fixation rails;
- said first hanging means comprises hooking parts;
- said fixation rails have a substantial ladder shape with two legs and a predetermined number of transversal rods joining said two legs, and wherein said transversal rods have a cross section with a substantial counter hook shape;
   - said frame comprises apertures associated to holes of growth media for receiving plants and through which an associated plant can go;
   - recesses are provided on said frame so that holes of said growth media for receiving plants and at least a portion of each growth medium are free;
   - said frame material comprises galvanized steel or a composite, advantageously ultraviolet and thermal stable and resistant to water;
   - said growth media are vertically superposed, and are separated by an interlayer, said interlayer both :
      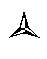 preventing direct contact between two growth media, and
      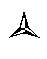 being water permeable.

The invention also relates to a vegetated wall comprising one or more vegetated panels as described above, and a hanging system of said at least one vegetated panel for fixing said at least one vegetated panel on a host wall, said hanging system comprising :
- first hanging means provided on the frame of said at least one vegetated panel,
- second hanging means fixed to the host wall comprising fixation rails.

The vegetated wall may also comprise one or more of the following characteristics, taken separately or in combination:
- said first hanging means comprise hooking parts;
- said fixation rails have a substantial ladder shape with two legs and a predetermined number of transversal rods joining said two legs;
- said transversal rods are regularly spaced;
- said transversal rods have a cross section with a substantial counter hook shape;
- said vegetated wall comprises at least one or more vegetated panels;
- said vegetated wall comprises an insulative layer between said host wall and said at least one vegetated panel;
- said vegetated wall comprises a single irrigation device for the whole vegetated panels or some of them;
- a vegetated panel is received in a frame having openings communicating with the vegetated panel below, so that water can flow from an upper vegetated panel to the vegetated panel below;
- said vegetated wall comprises at least a collector under the whole vegetated panels to collect the water in excess.

Other characteristics and advantages of the invention will emerge more clearly on reading the following description, which is given as a non-limiting illustrative example, and the attached drawings, among which:
- figure 1 is a side view of a vegetated panel,
- figure 2 is a schematic back view of the vegetated panel of figure 1,
- figure 3 is a schematic front view of a frame of a vegetated panel of figures 1 and 2
- figure 4 is a schematic side view of vegetated wall comprising at least a vegetated panel and a collector of the water in excess,
- figure 5a is a side view of a hanging device of a vegetated panel,
- figure 5b is a side view of a frame of a vegetated panel with hooking parts of the hanging device of figure 5a,
- figure 5c is an enlarged view of figure 5a,
- figure 6 is a schematic front view of a vegetated wall comprising four vegetated panels as in figures 1 to 3, and
- figure 7 is a bottom view of a frame of a vegetated panel.

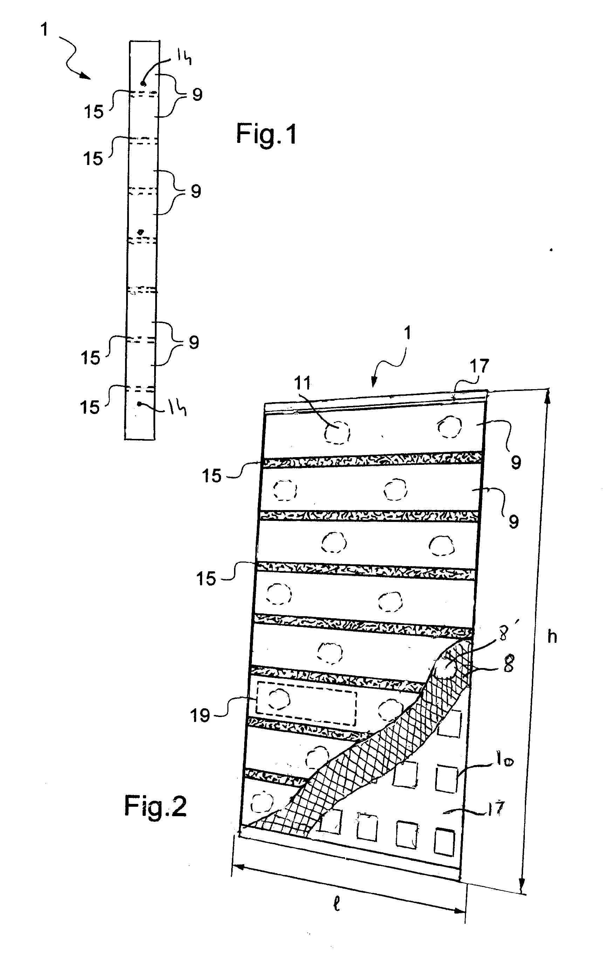

The invention relates to a vegetated panel 1 shown schematically in figures 1 to 3, for receiving plants.

This invention is in particular applicable to placing plants on vertical walls. It may be internal walls or external walls, in order to form a vegetated wall 3. Such a vegetated wall 3 may be provided inside or outside a building.

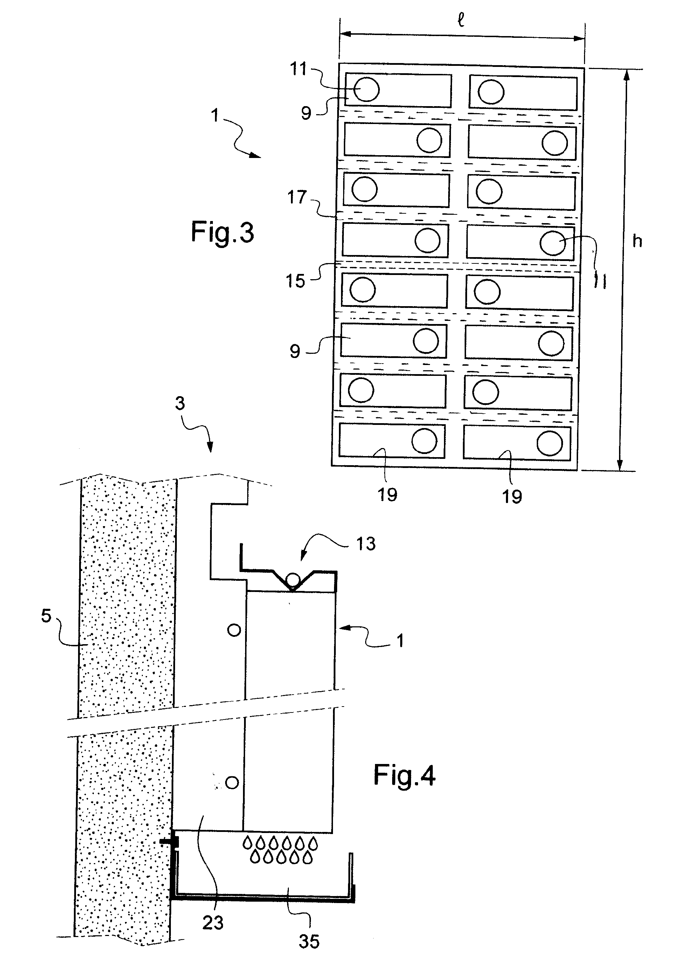

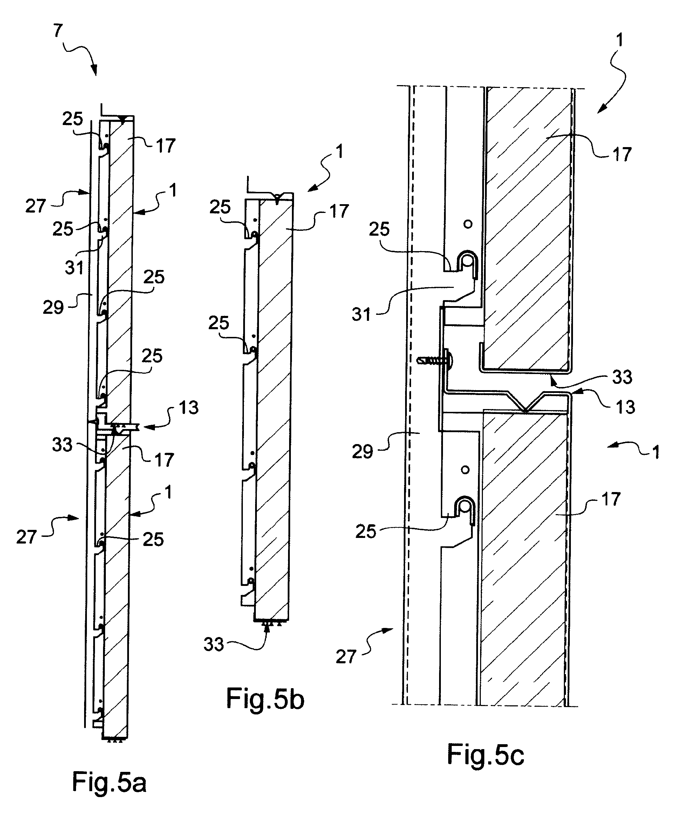

To that purpose, one or more panels 1 are fixed to a host wall 5 (figure 4) through a hanging system 7 schematically shown at figure 5a.

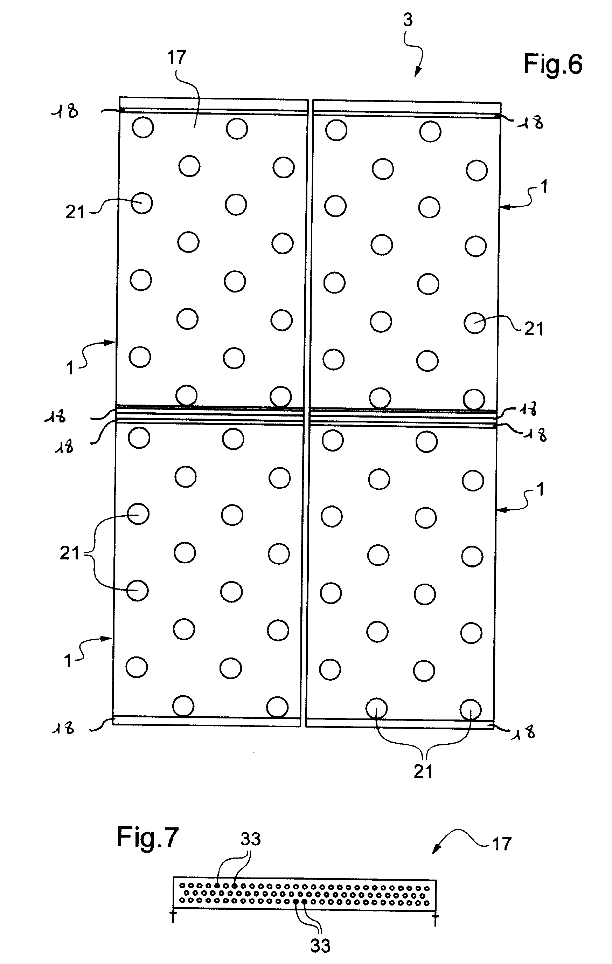

More particularly, such a vegetated wall 3 may comprise more than one vegetated panels 1. In the embodiment of figure 6, the vegetated wall 3 comprises four vegetated panels 1.

The host wall 5 (figure 4) may be an internal or an external wall of a building.

The vegetated panels 1 are vertically superposed one over the other.

Further panels 1 may also be aligned horizontally as shown in figure 6.

Back to figures 1 to 3, a vegetated panel 1 comprises several growth media 9 stacked one over the other in position of use. Each row of the vegetated panel 1 comprises for example one or two growth media 9, and the top media and bottom media are possibly thicker than the central ones, for example to properly fill in the frame mentioned later on.

The growth media 9 are vertically superposed in position of use.

At each level of the panel 1, there can be one growth medium 9.

Alternatively, there can be more than one growth medium 9.

As it can be seen from figures 2 and 3, a panel 1 with several stacked growth media 9, may have a parallelepipedic shape.

This parallelepipedic panel 1 may be around 25 to 240 cm high h. Preferably, the panel 1 has a height h under 1m.

The panel 1 may be from 20 to 70 cm, notably around 60 cm, large 1.

A growth medium 9 has for example an essentially rectangular shape.

Of course the shape of the growth media 9 and then the panel 1 may be adapted to conform to the geometry of the locations designed to receive the vegetated panel 1.

Each growth medium 9 can hold plants. For that, a growth medium 9 is provided with holes 11 for receiving plants, as it can be seen from figure 2. The growth media 9 may be provided with blind holes 11 according to the illustrated example of figure 2. By instance, a growth medium 9 may have a 6,6 cm thickness and the holes 11 may be 6 cm deep. Of course, this example is not limiting.

And, the holes 11 may be aligned along the longitudinal axis of the rectangular growth medium 9.

In the embodiment of figure 2, each growth medium 9 has two holes 11. Of course, this example is illustrative and a growth medium 9 can be provided with less or more holes 11 depending on the application.

Such a hole 11 may be provided by drilling with a tubular saw.

Those holes 11 can thus accommodate different types of plantings.

For example, seeds may be introduced into the holes 11 to fill and are cultivated until an adequate development for rooting is reached.

According to another solution, young plants are directly placed into each hole 11, which allows a savings of time for rooting.

It is also possible to place developed plants in these holes 11, which allows the panel 1 to be put into service very quickly.

In this case, a vegetated panel 1 can be introduced on request, immediately starting from cultivated plants. The plants can be of any kind, hardy plants, seasonal flowering plants, or even a combination of the two types.

Preferentially, plant are put into the holes 11 and are grown up during 1-2 month in the panel in a horizontal position that allows the roots of the plants to fix themselves in the growth media. During this phase, the panel may be put in a water bath for irrigation of the plants.

Another solution, is to directly put the panel 1 vertical, and then sprinkle, for example by placing a supply duct 13 on the first growth medium 9 above (figure 4).

According to a suitable embodiment, a growth medium 9 advantageously comprises mineral materials, in particular fibres. By instance, a growth medium material comprises rock (or stone) wool.

Alternatively, glass wool may be used.

More particularly, the fibres, such as rock wool fibres, are crimped. This non directed orientation of the fibres contribute to the retaining of water and good functioning of the panel.

According to a suitable embodiment, a growth medium 9 has a volumic mass of 30-80kg/m³ or lower, for example of 70 kg/m³. This volumic mass is generally between 30 and 45 kg/m³ for the glass wool/fibres made medium and between 45 and 80 kg/m³ for the rock wool/fibres made medium, and notably lower or equal to 50 kg/m³.

Thanks to this, only few operators are needed for handling.

Advantageously, the growth media/interlayer(s) assembly can be covered by a layer or envelope, for example formed from a web or fabric 8 or film, notably plastic made, for protecting and/or holding the assembly and/or preventing roots to go out of the panel and/or for giving a given aesthetic aspect to the vegetated panel, for example for giving the same color than the support of the assembly or for printing a logo, etc, the layer or envelope being on at least one side of the panel, generally front, and preferably being on both main side or surrounding all the assembly mentioned above.

This layer or envelope, namely fabric 8, at the same time generally presents holes 8' to let out the plants themselves

Further, the mineral fibres may be black or an additional element, namely the fabric 8 (figure 2) (which can be also black), may be added on the external face of the growth media 9, that means the face being seen. This black appearance improves the aesthetic appearance.

The growth media 9 of the panel 1 can be of the same or different sizes. Notably the growth media 9 may have different thickness according to the position, top or bottom for example, in the panel. Further, the growth media 9 can be one or several on each row of the panel between which interlayer(s) 15 (described below) may be placed.

The vegetated panel 1 may indeed comprise advantageously an interlayer 15 (figures 1 and 2) between two growth media 9. Thus, sandwich modules are made with each time two growth media 9 and interlayer 15 inserted between both growth media 9.

In the described embodiment, an interlayer 15 may comprise one or more strata.

For several layers of growth media generally, each growth medium, or layer or row of growth media is separated from the one below by at least one interlayer. The separated layers of growth media are approximately horizontal when the panel is in position of use.

Each interlayer 15 prevents direct contact between both growth media 9, to prevent notably capillary phenomenon, the concerned growth media 9 being those intended to be vertically superposed one compared to one another, the panel being intended to be placed vertically with growth media vertically superposed. The interlayer 15 is thus made so as to prevent notably most or all of the liquid in one media to flow through the capillary, notably under gravity.

The interlayer is made in a different material from the growth media 9, this material not enhancing water flowing, notably different from a fibrous or porous material of the type inducing capillary effects.

Moreover, simultaneously, the interlayer 15 is also chosen water permeable in so far as it lets a part of water (the water in excess) in a first growth medium flow to a second growth medium.

Preferably, the first growth medium is the upper in position of use, and the second growth medium is below the first one in position of use.

The water permeability of an interlayer 15 is advantageously such that the interlayer 15 lets flow the water in excess in the upper growth medium 9 to the growth medium 9 below.

The pF1 (water retention capacity) of the material(s) forming the interlayer 15 is preferably lower than 10% (10% water content, which means the fraction of the volume of substrate that is occupied with water). The pF1 is determined according to standard EN 13041 (1999) by subjecting samples to pull forces. Thus for a depression expressed as a function of the logarithm of the height of the water column (in cm), also called pF, the percentage of the volume of the substrate which is occupied by the liquid is defined, the pF1 corresponding practically to the condition of maximum retention and being established equal to 1 (or 10 cm on the water column). For the pF equal to 2 (pF2), which in practice corresponds to the highest degree of pull which can be exerted by plants, the pF2 of the interlayer is also preferably lower than 10%, and the pF0 (free drainage) is also preferably lower than 10%.

In this case, a growth medium 9 may be able to reach a predetermined maximal moisture content above which said water flows out into interlayer 15 below.

For example, this predetermined maximal moisture content is from 20 to 90%, notably around 60% or 70%.

Rock wool is for example able to reach a 20-90%, notably around 70%, moisture content. Above this maximal threshold, the water in excess streams below. This water in excess can then be distributed to the growth medium 9 below through the interlayer 15. As said before, the interlayer 15 is water permeable to let flow water in excess in the upper growth medium 9 to the growth medium 9 below.

Preferably, the interlayer 15 also prevents the sagging of growth media 9 on the one(s) underneath over time once the panel 1 is put in its vertical use position. Notably, the interlayer is thus advantageously mostly or entirely solid, it advantageously covers most of the adjacent surfaces of the growth media between which it is placed. It may cover at least 50%, preferably at least 75%, notably more than 90%, and generally, approximately all of the adjacent surfaces of the growth media 9 between which is placed.

Such an interlayer 15 may have a thickness around 1 to 3.5 cm. The interlayer 15 generally presents an approximate constant thickness throughout its surface.

The interlayer 15 can be made of one or rather several components or layers. Generally and advantageously, it comprises at least one layer of particles or flakes, held together by at least a binder.

The interlayer 15 can also comprises at least a veil or porous structure or structure with voids on at least one side.

The interlayer 15 or particles or flakes can be water repellent treated, which prevents the interlayer from water retention.

The interlayer 15 may be made of recycled material, notably plastic. The particles notably can be advantageously made from recycled material, notably plastic, providing also economic and ecologic advantages.

In a suitable embodiment, the interlayer 15 material may be made from waste from XPE foam and/or other plastics made products which are cut or trimmed into pieces. XPE means Cross-linked polyethylene.

Notably, the interlayer material may comprise XPE as a main material for example forming at least 75% of the interlayer 15.

Thus, the interlayer 15 is in a preferred embodiment a XPE-flakes structure.

Such a XPE-flakes structure provides open structure between the XPE-flakes, that enables a maximum water flowing.

Thus, as said before, the interlayer 15 is water permeable to let flow water in excess in the upper growth medium 9 to the growth medium 9 below.

Moreover, this interlayer 15 acts as a separative layer between two growth media 9. Thus, the roots from a growth medium 9 can not come into contact with the roots from another growth medium 9.

Indeed, at least one component, generally the veil, is made or treated such as it resist roots, notably either thanks to a pore or mesh size wide enough to let water flow but too small to let roots go through, or thanks to a treatment, generally chemical, to make it phytotoxic, that means toxic on plant growth, for example a treatment or covering with a metal like copper, etc.

Thus, the distinct particles and voids or significant spaces between said particles prevent the capillary phenomena whereas the veil prevents the passage of roots and simultaneously spreads the liquid coming from one growth media and which is transmitted so as to homogeneously wet the second growth media, underneath in position of use.

Thus, the intermediate layer prevents a capillary water flow effect meaning that would let nearly all water flow from the upper growth medium 9 down to the growth medium 9 directly by capillary.

On the contrary, the interlayer 15 ensures a water distributor for the growth medium 9 below. The water is distributed to the whole growth media 9 by gravity and through each interlayer 15.

Indeed, when water streams down from the upper growth medium 9, for example having reached a 60% or 70% moisture content, then water flows through interlayer 15, and then into the growth medium 9 below.

Thus, water is distributed to the growth medium 9 below only when the upper growth medium 9 has reached the maximal predetermined moisture content. Thus, the upper growth medium 9 keeps moisture content. Indeed, all the water does not immediately flow down by capillary and then accumulate in the lowest growth medium 9, such as when the growth media 9 touch each other.

According to this embodiment, the interlayer 15 ensures a regular and suitable distribution of water to the growth media 9 below.

As said previously, the irrigation may be provided first by a flat cultivation and then the panel 1 is put vertical. Or, an irrigation device may sprinkle the growth media 9.

In this later case, due to each interlayer 15 ensuring a suitable water distribution to the growth medium 9 below, a single irrigation device is needed for the whole growth media 9.

For example, water is supplied only to the upper growth medium 9 through the supply duct 13 schematically represented on figure 4.

Only for the first time in order to wet the panel, water may be supplied for two hours.

In normal functioning, it is generally only necessary to sprinkle again only one time a day for a couple of minutes in order to compensate water lost during day. This is preferably done by night.

Furthermore, in a more developed embodiment, the panel 1 may comprise a moisture meter (not shown) for measuring the moisture content of the growth media 9.

This moisture meter may be able to trigger an irrigation device when a predetermined moisture content for irrigation is reached. As an example, said predetermined moisture content for irrigation is generally around 40% or 50%.

Thus, when the moisture content reaches for example 50%, the panel 1 is sprinkled, by instance through said supply duct 13 supplying water only to the first growth medium 9. And then, water is regularly distributed to the growth media 9 below through interlayers 15 when reached for example a 60% or 70%moisture content.

Water may also be provided in case of dryness. In this case, the moisture meter (not shown) may be able to trigger a warning when the moisture content of a growth medium 9 reaches a predetermined minimal moisture content, for example around 40%.

Such a situation may happen in particularly sunny days and/or when it is very windy.

When the warning is triggered, the panel 1 is irrigated in a more consistent manner. For example, water may be given for a longer period than in normal functioning or for example with more flow.

The various given threshold for moisture content are not limiting. Those 40% minimal moisture content, 50% moisture content for irrigation, and 60% or 70% maximal moisture content are for example suited for rock wool growth media 9.

Those thresholds may be adapted depending on the density and the fibres structure of another material chosen for growth media 9.

Furthermore, by separating the growth media 9 from each other thanks to the interlayers 15 (figures 1-2), it thus is possible to easily replace a growth medium 9 by another. The entire panel 1 is not necessary to be changed.

The growth media 9 may be changed for example every five years.

Furthermore, the vegetated panel 1 according to the invention comprises a frame 17 (figures 2-3) for holding the growth media 9, and eventually the interlayers 15 between two growth media 9.

If appropriate, the frame 17 may be in several parts, notably a front part and a back part, assembled together.

This frame 17 may be a metallic frame 17. In particular, the frame 17 may be a galvanized steel frame 17. The frame material may alternatively comprise a composite, advantageously ultraviolet and thermal stable and resistant to water.

The frame is substantially parallelepipedic for holding the whole panel 1 when the panel 1 is substantially parallelepipedic and can be made from a front part and a back part tight together thanks for example to screws 14 (cf figure 1).

According to a first embodiment shown on figure 3, the frame 17 has front openings 19, for example substantially rectangular.

Those openings 19 may be dimensioned so that the holes 11 are free while the frame 17 covers partially the growth media 9 and covers partially or preferably totally the interlayers 15.

To clarify this point, an example of such an opening 19 place is shown schematically in dashed lines on figure 2. Similarly, on figure 3 an interlayer 15 place is shown schematically with dashed lines.

The frame 17 can also present apertures 10 (figure 2) on the back, front and back openings being notably provided for aesthetic reasons and for making the panel lighter, while letting plants go out.

According to a second embodiment shown on figure 6, the frame 17 has apertures 21 corresponding to holes 11 to let the plants go through these apertures 21. The holes 11 are free and the rest of the growth media 9 are covered by the frame 17 as well as the interlayers 15.

On figure 6, horizontal lines 18 define the border lines on extremities of a panel 1.

Moreover, the frame 17 is provided with fixing or hanging mean(s) or part(s) 25 cooperating with support(s) for hanging the vegetated panel on walls to be equipped with said vegetated panel. Said support(s) is/are fixed on wall to be equipped and is/are formed from beam(s) an/or rail(s), and said fixing or hanging mean(s) or part(s) are hooking part(s) provided on the frame for hanging on the support(s).

Thus the hanging system 7 (figure 5a) is provided on one hand on the panels 1 and on the other hand for example on the host wall 5 (figure 4).

The hanging system 7 comprises first 25 and second hanging means 27, 31 provided on the panels 1 and on the host wall 5.

More precisely, the first hanging means is provided on the frame 17 of the panels 1, and the second hanging means is provided on the host wall 5.

An insulative layer 23 may be provided between the host wall 5 and the panels 1. In this case, the second hanging means of the hanging system 7 can be provided on this insulative layer 23.

The first hanging means 25 are able to be placed on support axis 31 of said second hanging means.

In the described embodiment, the first hanging means 25 are able to be placed on support axis 31 of fixation rails 27 of said second hanging means.

For that, the hanging system 7 may comprise hooking parts 25 cooperating with fixation rails 27.

According to the illustrated embodiment of figures 5a-5c, the hooking parts 25 are hold by the frames 17 of panels 1. And, the fixation rails 27 may be fixed on the host wall 5 or the insulative layer 23.

The fixation rails 27 may have a substantial ladder shape with two vertical legs 29 which are joined each other by support axis 31. In the illustrated embodiment, the support axis 31 are regularly spaced.

The support axis 31 have a complementary shape to the hooking parts 25.

By instance, the support axis 31 are transversal rods which have a cross section with a counter hook shape. Thus, the hooking parts 25 engage this counter hook shape.

Further, a single irrigation device may be provided for the whole wall 3 when interlayers 15 (figures 1-2) separate the growth media 9 while being water permeable.

The single irrigation device may be provided to give water to some of the panels.

In this case, the frames 17 of each panel 1 may be provided with openings 33 (figure 7) facing the frame 17 of the panel 1 below, in order to let the water in excess in the first panel 1 flow down to the panel 1 below.

Additional ducts 13 (figure 5a) may be provided at the top of each panel 1 to redistribute the water in excess in the upper panel 1 flowing down through the openings 33.

At least one collector 35 (figure 4) below the lowest panel 1 may collect a part of water, such as the water in excess, after water distribution to the whole growth media 9 through interlayers 15 of each panel 1 of the wall 3.

The collector 35 may be a gutter.

With such a hanging device with hooking parts 25, the growth media 9 are secured to the host wall 5.

Moreover, this hanging system 7 provided on the frame 17 is suitable with a vegetated panel 1 needing irrigation.

The panels 1 can be easily placed or removed. And, the growth media 9 can easily be replaced.

Furthermore, with growth media 9 of rock wool of 50 kg/m³ density few operators are needed for handling.

The vegetated panels according to the invention are notably suitable for inside or advantageously outside decoration of walls of a building.

## Claims

1. Vegetated panel for receiving plants, comprising at least two growth media (9) for plants and comprising a frame (17) maintaining said growth media (9), **characterized in that** said frame (17) is provided with first hanging means (25) able to cooperate with complementary support axis (31) of second hanging means, in order to fix said vegetated panel to a host wall (5) to be equipped with said vegetated panel.

2. Vegetated panel according to claim 1, wherein said second hanging means is fixed on host wall (5) to be equipped and comprises fixation rails (27).

3. Vegetated panel according to claim 1 or 2, wherein said first hanging means (25) comprises hooking parts.

4. Vegetated panel according to claim 3, wherein :
- said fixation rails (27) have a substantial ladder shape with two legs (29) and a predetermined number of support axis (31) joining said two legs (29), and wherein
- said support axis (31) have a cross section with a substantial counter hook shape.

5. Vegetated panel according to one of claims 1 to 4, wherein said frame (17) comprises apertures (21) associated to holes (11) of growth media (9) for receiving plants and through which an associated plant can go.

6. Vegetated panel according to one of the preceding claims, wherein said frame (17) material comprises galvanized steel or composite.

7. Vegetated panel according to one of the preceding claims, wherein said growth media (9) are vertically superposed, and are separated by an interlayer (15), said interlayer (15):
- preventing direct contact between two growth media (9), and
- being water permeable.

8. Vegetated wall **characterized in that** it comprises at least one vegetated panel (1) according to one of the preceding claims, and a hanging system (7) of said at least one vegetated panel (1) for fixing said at least one vegetated panel (1) on a host wall (5), said hanging system (7) comprising :
- first hanging means (25) provided on the frame (17) of said at least one vegetated panel (1),
- second hanging means fixed to the host wall (5) comprising support axis (31).

9. Vegetated wall according to the preceding claim, wherein said first hanging means (25) comprise hooking parts.

10. Vegetated wall according to claim 8 or 9, wherein said second hanging means comprise fixation rails (27) having a substantial ladder shape with two legs (29) and a predetermined number of support axis (31) joining said two legs (29).

11. Vegetated wall according to claim 10, wherein said support axis (31) are regularly spaced.

12. Vegetated wall according to one of claims 8 to 11, wherein said support axis (31) have a cross section with a substantial counter hook shape.

13. Vegetated wall according to one of claims 8 to 12, wherein it comprises an insulative layer (23) between said host wall (5) and said at least one vegetated panel (1).

14. Vegetated wall according to one of claims 8 to 13, wherein it comprises a single irrigation device for the whole vegetated panels (1).

15. Vegetated wall according to the preceding claim, wherein a vegetated panel (1) is received in a frame (17) having openings (33) communicating with the vegetated panel (1) below, so that water can flow from an upper vegetated panel (1) to the vegetated panel (1) below.
